(19) Europäisches Patentamt / European Patent Office / Office européen des brevets

(11) **EP 1 739 626 B1**

(12) **FASCICULE DE BREVET EUROPEEN**

(45) Date de publication et mention
de la délivrance du brevet:
**03.12.2008 Bulletin 2008/49**

(51) Int Cl.:
*G06T 15/20* (2006.01)    *G06T 7/00* (2006.01)

(21) Numéro de dépôt: **06290397.6**

(22) Date de dépôt: **10.03.2006**

(54) **Procédé pour tracer des objets graphiques virtuels sur des images d'un terrain, notamment un terrain de jeu pour un évènement sportif**

Verfahren zur Darstellung virtueller graphischer Objekte in Bildern eines Felds, insbesondere eines Spielfelds für ein Sportereignis

Method of rendering virtual graphic objects in images of a field, notably of a game field for a sports event

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.06.2005 FR 0506659**

(43) Date de publication de la demande:
**03.01.2007 Bulletin 2007/01**

(73) Titulaire: **Leo Vision**
**92170 Vanves (FR)**

(72) Inventeurs:
• **Dulin, Serge**
  **77710 Nanteau Sur Lunain (FR)**
• **Gafsou, Olivier**
  **92130 Issy Les Moulineaux (FR)**
• **Lecharny, Jean**
  **78220 Viroflay (FR)**
• **Skrzypniak, Matthieu**
  **78120 Rambouillet (FR)**

(74) Mandataire: **Hassine, Albert et al**
**Cabinet Plasseraud**
**52 rue de la Victoire**
**75440 Paris Cedex 09 (FR)**

(56) Documents cités:
**US-A- 5 731 846**

• **SIMON, G., FITZGIBBON, A.W, ZISSERMAN, A.: "Markerless tracking using planar structures in the scene" AUGMENTED REALITY (ISAR 2000). PROCEEDINGS. IEEE AND ACM INTERNATIONAL SYMPOSIUM ON, DOI: 10.1109/ISAR.2000.880935, 5 octobre 2000 (2000-10-05), pages 120-128, XP002364794**
• **DIRK FARIN, SUSANNE KRABBE, PETER H. N. DE WITH, AND WOLFGANG EFFELSBERG: "Robust camera calibration for sport videos using court models" PROC. OF SPIE-IS&T ELECTRONIC IMAGING, vol. 5307, 2004, pages 80-91, XP002364795**
• **FAUGERAS, O; LUONG Q-T: "The Geometry of Multiple Images: the laws that govern the formation of multiple images of a scene and some of their applications" 2001, MIT , MASSACHUSETTS, USA , XP002364796 ISBN: 0-262-06220-8 * pages 13-14; figures 1.10,1.12 * * pages 17-18,22; figure 1.14 ***
• **KOYAMA T ET AL: "Live mixed-reality 3D video in soccer stadium" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7 octobre 2003 (2003-10-07), pages 178-187, XP010662809 ISBN: 0-7695-2006-5**
• **GURDJOS P ET AL: "About conditions for recovering the metric structures of perpendicular planes from the single ground plane to image homography" PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, vol. 1, 3 septembre 2000 (2000-09-03), pages 358-361, XP010533564 ISBN: 0-7695-0750-6**

• INAMOTO N ET AL: "Immersive observation of virtualized soccer match at real stadium model" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7 octobre 2003 (2003-10-07), pages 188-197, XP010662810 ISBN: 0-7695-2006-5

**Description**

L'invention concerne le traitement d'images acquises notamment pendant la retransmission en direct d'un événement sportif.

Elle vise en particulier un procédé pour dessiner un objet graphique virtuel sur une image réelle, acquise en direct, typiquement dans un contexte de traitement d'image en léger différé. Cet objet graphique virtuel est par exemple une ligne de hors-jeu pendant une rencontre de football ou une zone de hors-jeu délimitée par cette ligne, ou encore un rond de neuf mètres ou encore une flèche de distance du ballon au but.

Pour réaliser cette prestation sur des événements en direct, il pourrait être prévu des procédés complètement automatisés, du type utilisant une reconnaissance de forme et appliquant une insertion virtuelle dans l'image réelle selon une perspective appropriée par rapport à la forme reconnue, comme décrits notamment dans le document EP-0477351. Toutefois, de tels systèmes sont techniquement complexes, donc d'utilisation difficile.

On connaît aussi un système dit de *"warping"* sur une caméra fixe, tels que décrit dans le document EP-1047264. Toutefois, en principe, la caméra doit être fixe ou, au moins filmer en grand angle, pour inclure toujours la forme à reconnaître dans son champ. Or, cette dernière contrainte n'est pas vraiment compatible avec des phases de jeu, notamment en sport collectif, qui peuvent intervenir partout sur le terrain.

La présente invention vient améliorer la situation.

L'un des buts de la présente invention est de fournir un procédé simple d'utilisation pendant les phases de jeu, quand bien même une étape de calibration initiale, plus longue, serait nécessaire.

Un autre but de la présente invention est de fournir un procédé simple et susceptible d'être mis en oeuvre rapidement par un opérateur en léger différé pendant un événement sportif en cours.

Un autre but de la présente invention est de fournir un procédé capable d'être appliqué pour des réglages et des configurations quelconques de la caméra.

La présente invention propose à cet effet un procédé mis en oeuvre par des moyens informatiques pour tracer un objet graphique virtuel sur une image acquise par une caméra filmant un terrain, notamment un terrain de jeu pour un événement sportif.

Le procédé au sens de l'invention est défini dans la revendication 1.

L'invention peut s'expliquer comme suit, en référence aux dessins annexés qui illustrent, à titre d'exemple, d'autres avantages et caractéristiques de l'invention et sur lesquels :

- la figure 1 représente schématiquement un terrain de sport avec une caméra d'une installation pour la mise en oeuvre de l'invention,
- la figure 2 illustre un organigramme schématisant les étapes du procédé au sens de l'invention,
- les figures 3A à 3C représentent les vues illustrant les opérations mises en oeuvre pendant la calibration,
- les figures 4A à 4C représentent des vues illustrant les orientations angulaires et échelles possibles d'un abaque utilisé dans un mode de réalisation préféré,
- les figures 5A à 5D représentent les vues illustrant les opérations mises en oeuvre pendant une étape courante pour le tracé d'une ligne virtuelle de hors-jeu dans l'exemple représenté.

*Le choix des points caractéristiques*

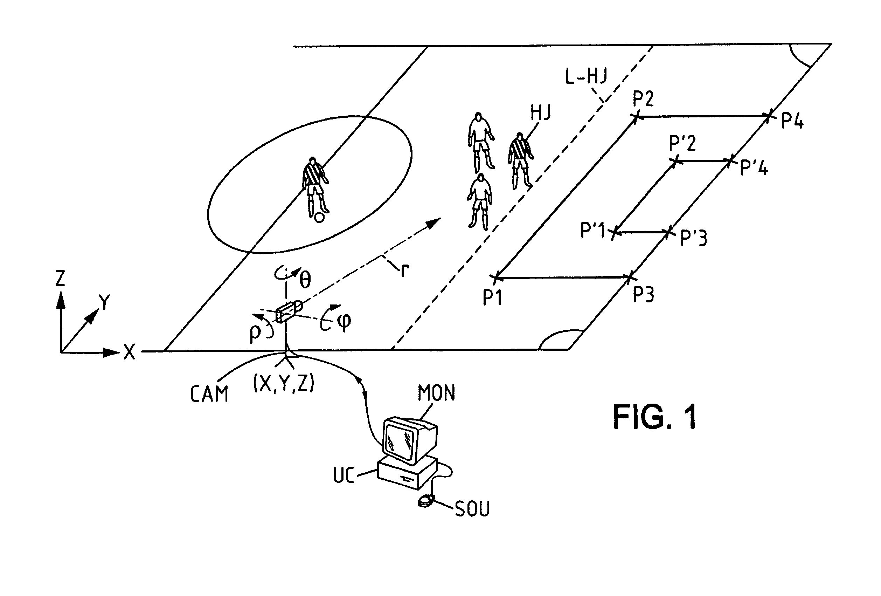

On connaît à l'heure actuelle huit réglages possibles d'une caméra CAM (figure 1), soit huit degrés de liberté possibles, qui sont :

- les trois coordonnées X, Y et Z de la caméra donnant sa position dans un repère cartésien x,y,z comme représenté sur la figure 1,
- l'angle d'azimut $\theta$ ou « pan » de la caméra,
- l'angle d'élévation $\varphi$ ou « tilt » de la caméra,
- l'angle de roulis $\rho$ ou « roll » de la caméra,
- le réglage en focale r ou « zoom » de la caméra, et
- le réglage des aberrations A.

On comprendra ainsi qu'en identifiant quatre points caractéristiques, dont les distances qui les séparent sont connues à l'avance, dans l'étape de calibration a) ci-avant, il est possible d'obtenir quatre coordonnées selon l'axe des abscisses et quatre coordonnées selon l'axe des ordonnées de l'image de calibration acquise et, de là, établir un système de huit équations à huit inconnues qui sont les paramètres $(X, Y, Z, \theta, \varphi, \rho, r, A)$ des réglages initiaux de la caméra à l'étape de calibration.

En réalité, on détermine initialement au moins quatre points caractéristiques. On peut en effet choisir de déterminer plus de quatre points, en particulier pour une surdétermination (consistant à mener une détermination exacte et précise) des huit paramètres à l'étape de calibration a).

Dans la plupart des applications, on choisira avantageusement de fixer dès l'étape de calibration le réglage des aberrations et le réglage du roulis et plutôt de faire varier, en cours d'acquisition de l'événement sportif, le zoom, le pan, le tilt et éventuellement les trois coordonnées de position (X,Y,Z) de la caméra. On comprendra ainsi que seule l'identification de trois points caractéristiques pendant l'étape courante b) suffit pour tracer une ligne L-HJ à la même échelle de zoom et avec la même perspective que le reste du terrain. En effet, la caméra étant fixe en roulis et réglée une fois pour toutes pour ce qui concerne les aberrations à l'étape a), seuls six degrés de liberté sont à prendre en compte et les paramètres relatifs (X, Y, Z, θ, φ, r) peuvent être déterminés grâce à l'identification des trois coordonnées en abscisses et des trois coordonnées en ordonnées des points caractéristiques relevés à l'étape b).

On vérifie bien la relation justifiant le choix de trois points caractéristiques à l'étape b) :

$$j=E[(N+1)/2]=3, \text{ avec } N=6 \text{ degrés de liberté.}$$

On indique en outre que, par exemple, l'angle de roulis peut varier aussi pendant l'étape courante b). Néanmoins, dans ce cas, le nombre N de degrés de liberté possibles pour la caméra vaut 7 et le nombre j de points caractéristiques à identifier à l'étape b) vaut 4. Par conséquent, cette réalisation est d'un moindre intérêt puisqu'il faut alors identifier autant de points caractéristiques qu'à l'étape de calibration, et ce, en léger différé.

Ainsi, en termes plus généraux, les données de position des quatre points caractéristiques identifiés à l'étape a) de calibration indiquent quatre coordonnées d'abscisses et quatre coordonnées d'ordonnées dans le plan de l'image de calibration, permettant de déduire au moins sept paramètres correspondant :

- à trois coordonnées cartésiennes fixes (X,Y,Z) de la position de la caméra,
- à des angles respectifs d'azimut, d'élévation et de roulis de la caméra pour acquérir l'image de calibration, et
- à une valeur de réglage de zoom de la caméra pour acquérir l'image de calibration.

Avantageusement, à l'étape de calibration a), on déduit en outre un huitième paramètre relatif à des aberrations de la caméra.

Dans une réalisation avantageuse, en particulier pour la retransmission de rencontres de football où l'on cherche à tracer virtuellement une ligne de hors-jeu L-HJ, la caméra CAM est fixe en position dans le repère cartésien (x,y,z). Par conséquent, la caméra est mobile au moins en azimut et/ou en élévation et/ou en zoom, de sorte que le nombre j de points caractéristiques à identifier à l'étape b) est de deux.

En réalité, seuls un point et une direction suffisent lorsque la caméra possède trois degrés de liberté possibles, comme on le verra plus loin. Néanmoins, comme il convient bien de superposer deux points caractéristiques à l'étape b), même dans ce cas, on comprendra que la formulation générale du procédé au sens de l'invention donnée précédemment avant la liste des figures englobe la variante dans laquelle on détermine j-1 points caractéristiques et une direction pour la mise en oeuvre de l'étape b) lorsque le nombre N de degrés de liberté possibles de la caméra est impair.

Ainsi, lorsque la caméra est mobile au moins en azimut et/ou en élévation et/ou en zoom, les données de position des deux points caractéristiques qui sont identifiés à l'étape b) sur l'image courante indiquent deux coordonnées d'abscisses et deux coordonnées d'ordonnées dans le plan de l'image courante, permettant de réévaluer au moins trois paramètres correspondant :

- à des angles respectifs d'azimut et d'élévation de la caméra pour acquérir l'image de courante, et
- à une valeur de réglage de zoom de la caméra pour acquérir l'image courante.

Avantageusement, à l'étape de calibration a), on fixe en outre définitivement l'angle de roulis de la caméra, de sorte que N=3 et j=2 comme indiqué ci-avant. Mais, en variante, si l'on estime que la caméra est susceptible de bouger en angle de roulis, ce qui correspond à N=4 degrés de liberté, on peut choisir de profiter de l'identification des coordonnées des deux points caractéristiques à l'étape b) pour déterminer à la fois :

- l'angle de roulis,
- l'angle d'azimut,
- l'angle d'élévation, et
- la valeur de zoom.

Dans ce cas, on utilise bien encore j=2 points caractéristiques à l'étape b).

En se référant à nouveau à la figure 1, les points caractéristiques qui peuvent être choisis sont avantageusement des intersections de lignes de jeu du terrain, aisément identifiables. Dans l'exemple représenté, les points caractéristiques font partie d'une surface de réparation d'un terrain de football. Ils peuvent constituer les quatre coins de la surface de réparation P1, P2, P3, P4, ou encore les quatre coins de la zone de six mètres P'1, P'2, P'3, P'4, ou encore un mélange des deux jeux de points.

En particulier, on indique que le procédé au sens de l'invention est avantageusement flexible en fonction des angles de prises de vue de la caméra car il suffit d'identifier quatre points caractéristiques pour l'étape a) et deux points caractéristiques pour l'étape b), parmi les huit points P1, P2, P3, P4, P'1, P'2, P'3, P'4 ou même d'autres points tels que les angles de corner, pour déterminer les paramètres de réglage courant de la caméra à l'étape b). En particulier, on comprendra que l'un ou les deux points caractéristiques qui sont identifiés à l'étape b) ne font pas forcément partie des quatre qui ont été identifiés à l'étape a). Il suffit en effet de bien connaître, au préalable, les distances séparant ces huit points P1, P2, P3, P4, P'1, P'2, P'3, P'4 et de pouvoir identifier chaque point en signalant l'identité de chaque point à un calculateur d'une installation au sens de l'invention.

Ainsi, tout ou partie des j points identifiés pendant l'étape courante b) peuvent être parmi les quatre points qui ont été identifiés à l'étape de calibration a), ou encore les j points peuvent être distincts des points de calibration, l'essentiel étant que les distances qui séparent tous ces points (et qui peuvent être nulles le cas échéant) soient connues à l'avance. On rappelle ici que les terrains de jeu, par exemple la zone de la surface de réparation pour un terrain de football ou encore un court de tennis, ont des dimensions bien précises et rigoureusement respectées. Par conséquent les distances entre intersections de lignes de jeu (par exemple les points P1 à P'4) sont en principe fiables pour la mise en oeuvre du procédé.

On retiendra pour ce qui suit que si la caméra peut se déplacer en tilt et/ou en pan et/ou en zoom pendant l'étape d'acquisition courante b), il sera toujours possible d'identifier au moins deux points caractéristiques parmi tous les points précités.

*Implémentation informatiaue et interface hommelmachine*

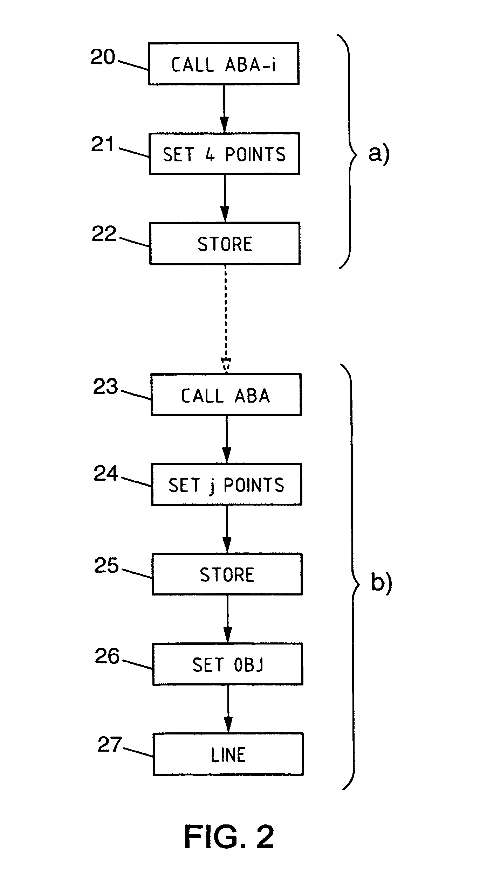

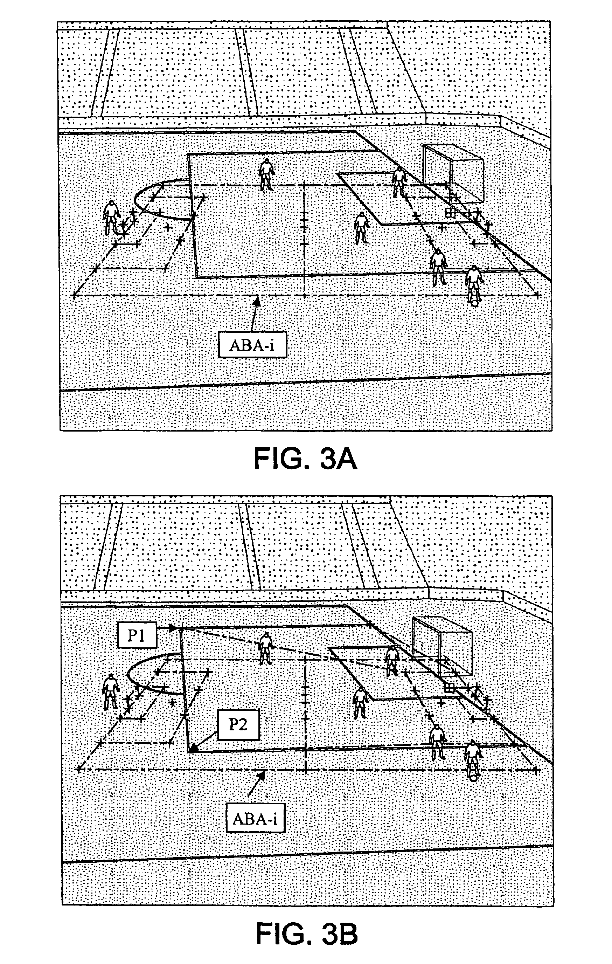

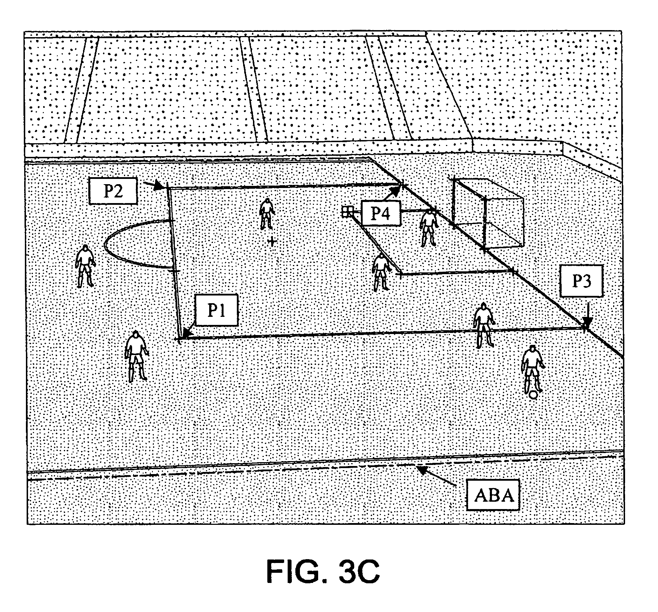

En référence à nouveau à la figure 1, la caméra CAM est reliée à des moyens informatiques tels qu'une unité centrale UC, un moniteur de visualisation MON et un organe de saisie SOU tel qu'une souris, une manette, une tablette graphique ou tout autre moyen permettant à un utilisateur de pointer sur des points caractéristiques qu'il reconnaît sur son moniteur MON. Par ailleurs, l'unité centrale UC comporte une mémoire capable de stocker les distances respectives entre points caractéristiques d'un terrain de football classique (ou de tennis ou encore de rugby) et ces données peuvent, dans une réalisation très avantageuse, apparaître à l'opérateur sous la forme d'un abaque initial ABA-i du terrain qui s'affiche sur le moniteur MON, comme on le voit par exemple sur la figure 3A. En particulier, l'abaque ABA-i apparaît comme superposé avec l'image acquise du terrain. Toutefois, l'abaque initial ABA-i se présente de manière *"brute"* et ne tient pas compte du fait que des paramètres de réglage de la caméra vont être fixés à l'étape ultérieure de calibration a). Ainsi, en référence maintenant à la figure 2, l'opérateur peut, à une première étape 20, appeler, à partir de la mémoire de l'unité centrale, l'affichage de l'abaque initial ABA-i qui apparaît alors superposé à l'image de calibration, comme représenté sur la figure 3A. Le procédé se poursuit ensuite par la calibration proprement dite avec, en particulier, l'identification par l'opérateur de quatre points caractéristiques P1, P2 (voir figure 3B) et P3, P4 (voir figure 3C) et le pointage à l'aide de l'organe de saisie SOU par l'opérateur de ces points caractéristiques, à l'étape 21 de la figure 2. Les coordonnées (X,Y) des points caractéristiques pointés sont ensuite stockées en mémoire de l'unité centrale UC à l'étape 22. En particulier, l'unité centrale UC, en mettant en oeuvre un logiciel programmé de façon appropriée, reconstruit un nouvel abaque ABA tenant compte des degrés de liberté possibles de la caméra, en l'espèce des angles d'azimut et d'élévation et de la focale (zoom).

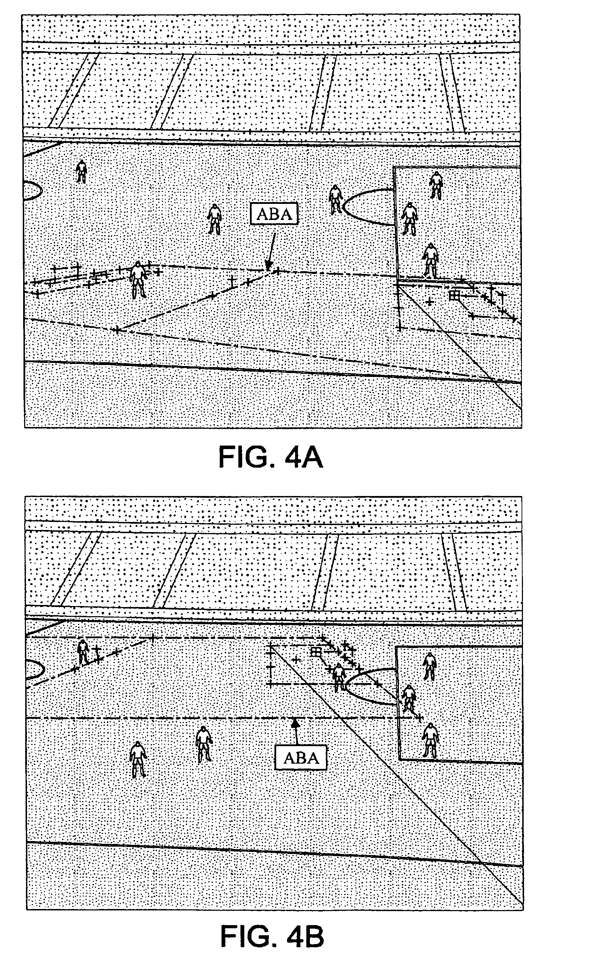

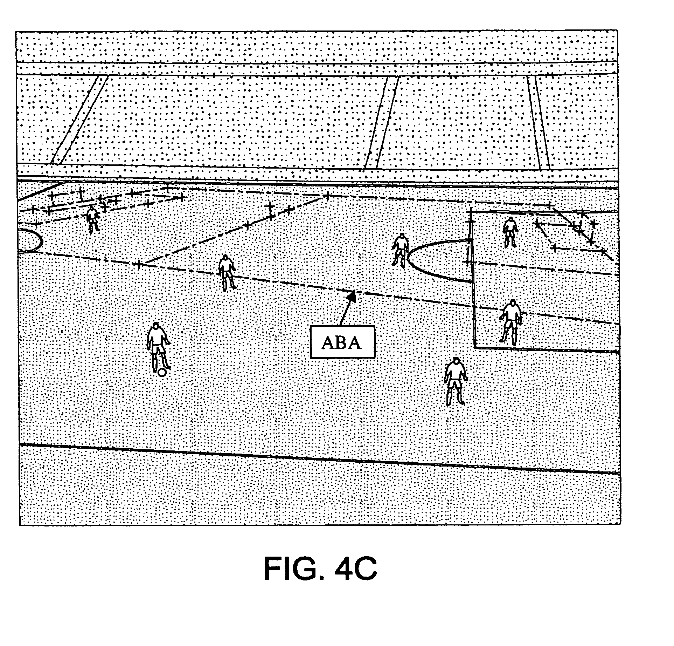

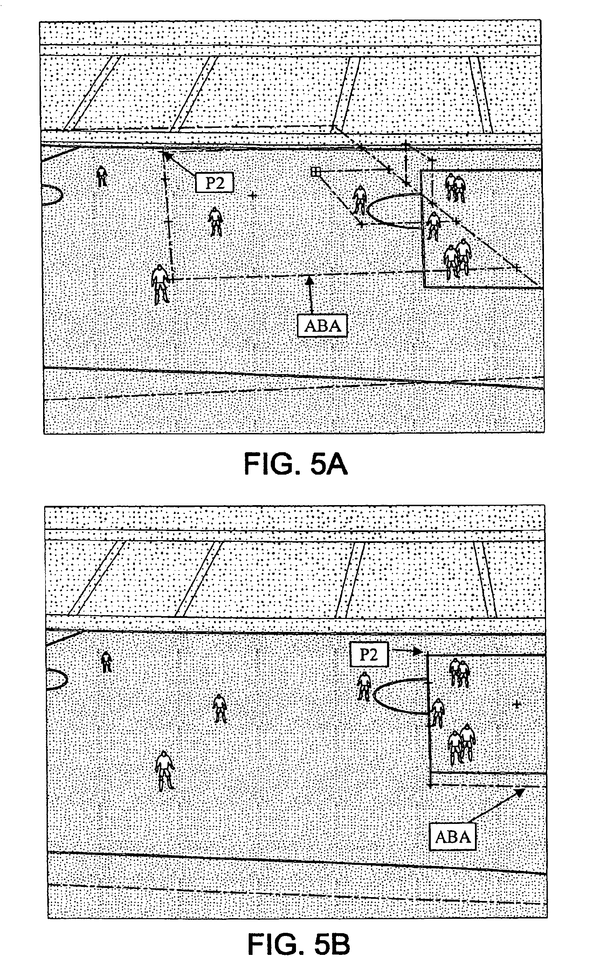

On a représenté sur les figures 4A à 4C l'abaque ABA, une fois que l'étape de calibration a) a été menée. L'abaque ABA apparaît en superposition sur une image courante. Pour passer de la vue de la figure 4A à celle de la figure 4B ou de la figure 4C, l'opérateur simule un déplacement de la caméra en changeant d'angle d'azimut et/ou d'élévation et/ou le zoom. Ainsi, l'opérateur peut caler l'abaque ABA construit après l'étape de calibration sur l'image courante quels que soient les réglages courants de la caméra en zoom, élévation et azimut. Pour ce faire, il lui suffit de déplacer virtuellement l'abaque ABA tel qu'il apparaît superposé sur l'image courante acquise, comme on va le voir maintenant en référence aux figures 5A à 5C.

L'étape b) courante pour l'incrustation virtuelle de ligne intervient ensuite, comme suit. En référence à la figure 2 (étape 23), l'opérateur appelle l'abaque ABA, calibré pour respecter la position fixe de la caméra selon ses coordonnées cartésiennes (X,Y,Z) et son angle de roulis. Sur la vue de la figure 5A, l'abaque ABA apparaît alors superposé à l'image courante mais ne se superpose pas encore aux lignes du terrain.

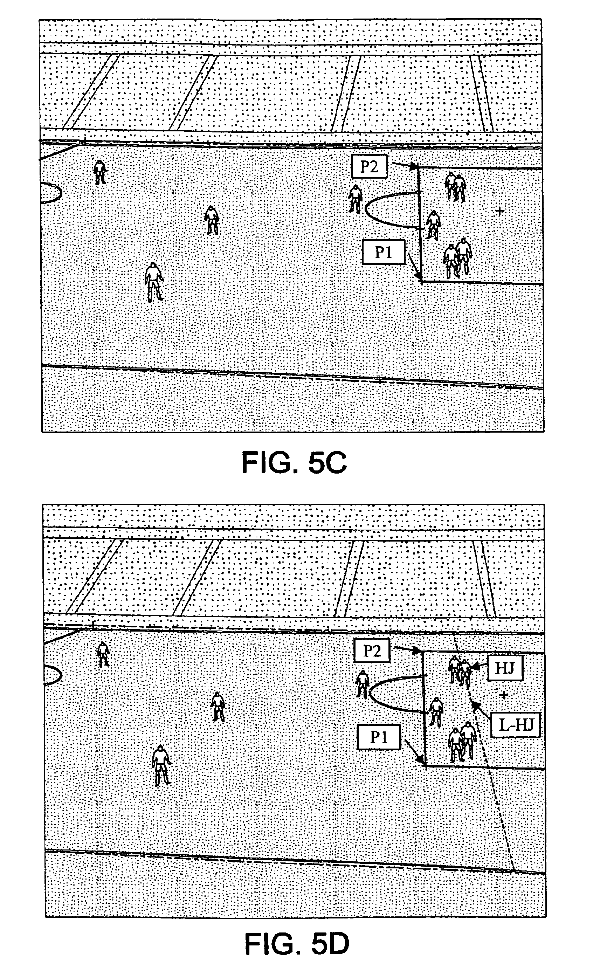

On rappelle qu'une simulation d'un déplacement de l'abaque ABA, en zoom et en angles d'azimut et élévation, peut être commandé par l'opérateur comme décrit ci-avant en référence aux figures 4A à 4C. En l'espèce, comme représenté sur la vue de la figure 5B, l'opérateur commande un déplacement de l'abaque selon les angles précités pour venir faire correspondre le point caractéristique P2 de l'abaque avec le point homologue P2 qui apparaît sur l'image courante du terrain. Pour ce faire, l'opérateur clique successivement sur le point P2 de l'abaque tel qu'il apparaît sur la figure 5A et sur le point homologue correspondant au coin gauche de l'entrée de la surface de réparation, dans l'exemple représenté. Sur la figure 5B, ces deux points sont superposés mais l'abaque ABA ne semble pas à l'échelle, l'abaque paraissant plus grand que les lignes réelles du terrain. L'opérateur ajuste alors le zoom de l'abaque en faisant coïncider le point P1 de l'abaque avec le point homologue du terrain correspondant au coin droit de l'entrée de la surface de réparation, comme représenté sur la figure 5C. L'opérateur peut ajuster simplement le zoom par exemple à partir d'un curseur sur l'organe de saisie SOU, par exemple à partir de la molette de la souris, étant entendu que, pour les trois degrés de liberté restant dans l'exemple décrit, seuls un point et une direction suffisent en principe pour déterminer les réglages courants de la caméra et tracer ensuite la ligne virtuelle selon ces réglages.

Ainsi, l'étape 24 de la figure 2 consiste à ajuster la position et l'échelle de l'abaque ABA par rapport à l'apparence des lignes du terrain sur l'image courante et ce, à partir, par exemple, de deux points P1 et P2. A l'étape 25, les coordonnées de ces deux points (ou d'un point et une direction) sont stockées en mémoire pour la suite du procédé. A l'étape 26, l'opérateur clique sur un objet, par exemple le joueur HJ de la figure 5D, en lequel il souhaite tracer une ligne virtuelle et cette ligne apparaît ensuite à l'étape 27 avec la même perspective et la même échelle que le terrain, comme le voit sur la figure 5D où la ligne virtuelle tracée porte la référence L-HJ.

Ainsi, en termes plus génériques, l'abaque ABA intervient comme suit dans l'invention. De façon avantageuse :

- à l'étape a), à partir d'une triangulation menée sur les quatre points caractéristiques de l'image de calibration, on détermine un abaque ABA du terrain, et
- à l'étape b), on ajuste cet abaque en orientation angulaire et en échelle pour être superposé à une partie du terrain apparente sur l'image courante en effectuant une seconde triangulation menée sur les deux points caractéristiques P1 et P2 de l'image courante.

Dans ce cas, un opérateur mettant en oeuvre par des moyens informatiques comportant au moins l'unité centrale UC, le moniteur de visualisation MON et l'organe de saisie SOU,

• à l'étape a),

- commande un affichage simultané de quatre points caractéristiques de l'abaque et de l'image de calibration (étape 20 de la figure 2),
- superpose, un à un, les quatre points caractéristiques de l'abaque avec les quatre points caractéristiques homologues du terrain sur l'image de calibration (étape 21 de la figure 2),
- commande la mémorisation des coordonnées des points superposés (étape 22 de la figure 2),

• et à l'étape b) :

- commande un affichage simultané d'au moins deux points de l'abaque et de l'image courante (étape 23 de la figure 2),
- superpose un premier point caractéristique de l'abaque avec un point caractéristique homologue du terrain sur l'image courante pour régler l'orientation angulaire de l'abaque sur l'image courante et un second point caractéristique de l'abaque avec un point caractéristique homologue du terrain sur l'image courante pour régler l'échelle de l'abaque sur l'image courante (étape 24 de la figure 2),
- commande la mémorisation des coordonnées des deux points superposés (étape 25 de la figure 2),
- et sélectionne un point choisi du terrain sur l'image courante, comme le joueur de champ HJ de la figure 5D, pour le tracé de ligne L-HJ en ce point.

Plus exactement, dans l'exemple représenté sur la figure 5D, ce point choisi HJ correspond à la position d'un joueur sur le terrain de football et la ligne tracée en ce point choisi est une ligne de hors-jeu. En variante, cette ligne pourrait délimiter une zone de hors-jeu qui commence en la ligne L-HJ et qui s'étend vers les limites du terrain, à droite de la ligne L-HJ dans l'exemple représenté sur la figure 5D.

Dès lors que l'opérateur peut utiliser les moyens informatiques précités, judicieusement programmés pour la mise en oeuvre du procédé ci-avant, la présente invention vise aussi une installation pour la mise en oeuvre du procédé et comportant les caractéristiques de la revendication 15.

La présente invention vise aussi, par conséquent, un tel produit programme d'ordinateur, destiné à être stocké dans une mémoire d'une unité centrale d'une installation du type précité et/ou sur un support mémoire amovible destiné à coopérer avec un lecteur homologue de l'unité centrale, et/ou téléchargeable via un réseau de télécommunication, le programme comportant alors des instructions pour la mise en oeuvre du procédé ci-avant.

La figure 2 peut être un exemple de réalisation d'un organigramme propre à l'algorithme du programme.

Bien entendu, la présente invention ne se limite pas à la forme de réalisation décrite ci-avant à titre d'exemple ; elle s'étend à d'autres variantes.

Par exemple, dans une variante à l'application de la retransmission des rencontres de football décrite dans l'exemple ci-avant, la présente invention peut aussi s'appliquer aux rencontres de rugby, pour lesquelles il est souvent avantageux de représenter une ligne d'en-avant. Pour cette application, l'image courante, en particulier de l'étape b), consistera plutôt en une séquence filmée tandis que la caméra reste néanmoins fixe en réglage. Le point choisi pour tracer la ligne virtuelle correspond à la position de la main d'un joueur sur le terrain de rugby et la ligne tracée est une ligne d'en-avant. Les degrés de liberté de la caméra peuvent être différents dans cette application. Il peut alors être prévu plutôt une translation le long de la ligne de touche, un réglage en focale et en angle d'élévation, ce qui correspond encore à deux points caractéristiques à fixer à l'étape courante b), ou plus exactement à un point et une direction comme décrit ci-avant en référence aux figures 5A à 5C.

Dans encore un autre mode de réalisation, l'image traitée est issue d'une séquence d'images et l'invention est utilisée pour permettre de déterminer les paramètres de caméra sur différentes images de la séquence.

Plus précisément, à l'issu du procédé tel que décrit précédemment, le procédé comporte une étape d'analyse comparative de l'image à un instant donné, dit instant de détection, avec d'autres images de la séquence. Cette analyse comparative délivre une évaluation du changement entre les images. Dans l'exemple, cette analyse est réalisée avec un algorithme connu d'analyse de changements globaux des images, également appelé optical flow, permettant de déterminer des vecteurs mouvement entre les images.

Les résultats de l'analyse comparative sont utilisés pour estimer les modifications des paramètres de la caméra entre les différentes images, à partir des paramètre de caméra pour le réglage courant à l'instant de détection, afin d'obtenir des paramètres estimés pour les différentes images de la séquence.

Avantageusement, ces paramètres estimés sont utilisés pour modifier l'objet graphique virtuel de manière à ce que cet objet soit appliqué sur les différentes images de la séquence avec un effet de perspective et/ou de zoom adapté. Ainsi, l'objet graphique virtuel est propagé entre les différentes images de la séquence.

Un tel procédé peut être mis en oeuvre en temps différé sur une séquence donnée ou bien être mis en oeuvre en temps réel. Dans ce dernier cas, il est préférable que l'algorithme d'analyse comparative soit en permanence appliqué de sorte que, dès que des paramètres de caméra courants sont établis, il est possible d'obtenir des paramètres de caméra estimés.

**Revendications**

1. Procédé mis en oeuvre par des moyens informatiques pour tracer un objet graphique virtuel sur une image acquise par une caméra filmant un terrain, notamment un terrain de jeu pour un événement sportif, **caractérisé en ce qu'**il comporte:

   a) une étape de calibration, comprenant les opérations :

   - prévoir une caméra à laquelle on laisse N degrés de liberté de réglage, le nombre N étant tel que le nombre $j=E[(N+1)/2]$ est inférieur à 4, $E(x)$ désignant la partie entière de x,
   - obtenir par ladite caméra une image de calibration, fixe, du terrain, et pointer manuellement (21), sur ladite image de calibration, au moins quatre points caractéristiques du terrain, séparés par des distances respectives connues à l'avance,
   - mémoriser (22) des données de positions apparentes sur l'image de calibration desdits quatre points caractéristiques,

   b) une étape de tracé virtuel sur une image courante, acquise avec un réglage courant de la caméra selon lesdits N degrés de liberté, comprenant les opérations :

   - sélectionner manuellement (24) j points caractéristiques apparents sur l'image courante, séparés entre eux et desdits quatre points caractéristiques de l'étape de calibration par des distances respectives connues à l'avance, et mémoriser les données de positions apparentes sur l'image courante desdits j points caractéristiques,
   - par triangulation sur les quatre points caractéristiques de l'image de calibration, d'une part, et sur les j points caractéristiques de l'image courante, d'autre part, retrouver un effet de perspective et/ou de zoom propre au réglage courant de la caméra selon les N degrés de liberté,
   - sélectionner manuellement (26) un point choisi de l'image courante et commander (27) un tracé de l'objet graphique en ledit point choisi, ledit tracé étant appliqué et apparaissant sur l'image courante avec le même effet de perspective et/ou de zoom que le terrain sur l'image courante.

2. Procédé selon la revendication 1, **caractérisé en ce que** la caméra (CAM) est fixe en position mais mobile au moins en azimut (θ) et/ou en élévation (φ) et/ou en zoom (r), de sorte que le nombre j de points caractéristiques identifiés à l'étape b) est de deux.

3. Procédé selon l'une des revendications 1 et 2, **caractérisé en ce que** les données de position des quatre points caractéristiques identifiés à l'étape a) de calibration indiquent quatre coordonnées d'abscisses et quatre coordonnées d'ordonnées dans le plan de l'image de calibration, permettant de déduire au moins sept paramètres correspondant :

- à trois coordonnées cartésiennes (X,Y,Z) de position de la caméra,
- à des angles respectifs d'azimut (θ), d'élévation (φ) et de roulis (ρ) de la caméra pour acquérir l'image de calibration, et
- à une valeur de réglage de zoom (r) de la caméra pour acquérir l'image de calibration.

4. Procédé selon la revendication 3, prise en combinaison avec la revendication 2,
**caractérisé en ce que**, à l'étape de calibration a), on fixe définitivement un angle de roulis (ρ) de la caméra,
et **en ce que** les données de position des deux points caractéristiques identifiés à l'étape b) sur l'image courante indiquent deux coordonnées d'abscisses et deux coordonnées d'ordonnées dans le plan de l'image courante, permettant de réévaluer au moins trois paramètres correspondant :

- à des angles respectifs d'azimut (θ) et d'élévation (φ) de la caméra pour acquérir l'image de courante, et
- à une valeur de réglage de zoom (r) de la caméra pour acquérir l'image courante.

5. Procédé selon l'une des revendications 3 et 4, **caractérisé en ce qu'**à l'étape de calibration a), on déduit en outre un huitième paramètre relatif à des aberrations de la caméra.

6. Procédé selon l'une des revendications 2 et 4, **caractérisé en ce que** :

- à l'étape a), à partir d'une triangulation menée sur les quatre points caractéristiques de l'image de calibration, on détermine un abaque (ABA) du terrain, et
- à l'étape b), on ajuste ledit abaque (ABA) en orientation angulaire et en échelle pour être superposé à une partie du terrain apparente sur l'image courante en effectuant une seconde triangulation menée sur les deux points caractéristiques de l'image courante.

7. Procédé selon la revendication 6, mis en oeuvre par des moyens informatiques comportant au moins une unité centrale (UC), un moniteur de visualisation (MON) et un organe de saisie (SOU), lesdits moyens étant utilisés par un opérateur,
**caractérisé en ce que**

• à l'étape a), l'opérateur :

- commande (20) un affichage simultané de quatre points caractéristiques de l'abaque (ABA-i) et de l'image de calibration,
- superpose (21), un à un, les quatre points caractéristiques de l'abaque (ABA) avec les quatre points caractéristiques homologues du terrain sur l'image de calibration,
- commande (22) la mémorisation des coordonnées des points superposés,

• à l'étape b), l'opérateur :

- commande (23) un affichage simultané d'au moins deux points de l'abaque (ABA) et de l'image courante,
- superpose (24) un premier point caractéristique de l'abaque avec un point caractéristique homologue du terrain sur l'image courante pour régler l'orientation angulaire de l'abaque sur l'image courante et un second point caractéristique de l'abaque avec un point caractéristique homologue du terrain sur l'image courante pour régler l'échelle de l'abaque sur l'image courante,
- commande (25) la mémorisation des coordonnées des deux points superposés,
- et sélectionne (26) un point choisi du terrain sur l'image courante pour le tracé (27) de l'objet graphique en ledit point.

8. Procédé selon l'une des revendications précédentes, **caractérisé en ce que** les points caractéristiques (P1,P2,P3,P4,P'1,P'2,P'3,P'4) sont prédéterminés en tant qu'intersections de lignes de jeu du terrain.

9. Procédé selon la revendication 8, **caractérisé en ce que** les points caractéristiques font partie d'une surface de réparation d'un terrain de football.

10. Procédé selon l'une des revendications précédentes, **caractérisé en ce que** ledit point choisi correspond à la position d'un joueur (HJ) sur un terrain de football et l'objet graphique virtuel tracé en ledit point choisi est une ligne de hors-jeu (L-HJ).

11. Procédé selon l'une des revendications 1 à 8, **caractérisé en ce que** l'image courante de l'étape b) consiste en une séquence filmée tandis que la caméra (CAM) est fixe en réglage, et **en ce que** ledit point choisi correspond à la position de la main d'un joueur sur un terrain de rugby et l'objet graphique tracé en ledit point choisi est une ligne d'en-avant.

12. Procédé selon l'une des revendications 1 à 11, **caractérisé en ce que** l'image courante de l'étape b) est extraite d'une séquence d'images et **en ce que** le procédé comporte en outre une étape d'analyse comparative d'autres images de la séquence avec l'image courante et une étape d'estimation des paramètres de caméra lors de l'acquisition des autres images à partir des paramètres obtenus pour l'image courante.

13. Procédé selon la revendication 12, **caractérisé en ce que** la dite étape d'analyse comparative met en oeuvre un algorithme d'analyse de changements globaux des images.

14. Procédé selon l'une des revendications 12 et 13, **caractérisé en ce que** les paramètres de caméra estimés sont utilisés pour modifier le tracé de l'objet graphique entre les images de la séquence.

15. Installation pour la mise en oeuvre du procédé selon l'une des revendications précédentes, comportant :

- une caméra (CAM) réglable selon N degrés de liberté, le nombre N étant tel que j=E[(N+1)/2] est inférieur à 4, E(x) désignant la partie entière de x, et
- des moyens informatiques comportant au moins une unité centrale (UC) reliée à la caméra, un moniteur de visualisation (MON) et un organe de saisie (SOU),

**caractérisé en ce que** l'unité centrale comporte une mémoire propre à stocker un produit programme d'ordinateur comportant des instructions pour la mise en oeuvre du procédé.

16. Produit programme d'ordinateur destiné à être stocké dans une mémoire d'une unité centrale d'une installation selon la revendication 15, et/ou sur un support mémoire amovible destiné à coopérer avec un lecteur homologue de ladite unité centrale, et/ou téléchargeable via un réseau de télécommunication, **caractérisé en ce qu'**il comporte des instructions pour la mise en oeuvre du procédé selon l'une des revendications 1 à 14.

**Claims**

1. Method implemented by computer means for plotting a virtual graphical object on an image taken by a camera filming a field, in particular a field of play for a sporting event, **characterised in that** it comprises:

a) a calibration step, comprising the following operations:

- providing a camera for which N degrees of freedom of adjustment are provided, the number N being such that the number j = E[(N+1)/2] is less than 4, E(x) designating the whole part of x,
- obtaining, via said camera, a fixed calibration image of the field, and manually plotting (21) on said calibration image at least four characteristic points of the field separated by predetermined respective distances,
- storing (22) positional data appearing on the calibration image of said four characteristic points,

b) a step of virtual plotting on a current image, taken with current adjustment of the camera according to said N degrees of freedom, comprising the following operations:

- manually selecting (24) j characteristic points appearing on the current image, separated from each other and from said four characteristic points of the calibration step by predetermined respective distances, and storing the positional data appearing on the current image of said j characteristic points,
- by means of triangulation on the four characteristic points of the calibration image on the one hand and on the j characteristic points of the current image on the other hand, obtaining a perspective and/or zoom effect for the current adjustment of the camera according to the N degrees of freedom,
- manually selecting (26) a chosen point of the current image, and controlling (27) a plotting of the graphical object to said chosen point, said plotting being applied and appearing on the current image with the same perspective and/or zoom effect as the field on the current image.

**2.** Method as claimed in Claim 1, **characterised in that** the camera (CAM) is fixed in position but can move at least in terms of azimuth (θ) and/or of elevation (φ) and/or of zoom (r) such that the number j of characteristic points identified in step b) is two.

**3.** Method as claimed in any one of Claims 1 and 2, **characterised in that** the positional data of the four characteristic points identified in the calibration step a) indicate four x-axis co-ordinates and four y-axis co-ordinates in the plane of the calibration image, enabling at least seven parameters to be deduced which correspond to:

- three positional Cartesian co-ordinates (X, Y, Z) of the camera,
- respective angles of azimuth (θ), of elevation (φ) and of roll (ρ) of the camera to obtain the calibration image, and
- a zoom (r) adjustment value of the camera to obtain the calibration image.

**4.** Method as claimed in Claim 3, in combination with Claim 2, **characterised in that** in the calibration step a), a roll (ρ) angle of the camera is definitively set, and **in that** the positional data of the two characteristic points identified in step b) on the current image indicate two x-axis co-ordinates and two y-axis co-ordinates in the plane of the current image, enabling at least three parameters to be re-evaluated which correspond to:

- respective angles of azimuth (θ) and of elevation (φ) of the camera to obtain the current image, and
- a zoom (r) adjustment value of the camera to obtain the current image.

**5.** Method as claimed in any one of Claims 3 and 4, **characterised in that** in the calibration step a), an eighth parameter relating to aberrations of the camera is furthermore deduced.

**6.** Method as claimed in any one of Claims 2 and 4, **characterised in that**:

- in step a), from a triangulation drawn on the four characteristic points of the calibration image, a nomogram (ABA) of the field is determined, and
- in step b), said nomogram (ABA) is adjusted in angular orientation and in scale in order to be superposed on one part of the field appearing on the current image, by performing a second triangulation drawn on the two characteristic points of the current image.

**7.** Method as claimed in Claim 6, implemented by computer means comprising at least one central processing unit (CPU), a display monitor (MON) and an input device (SOU), said means being used by an operator, **characterised in that**

* in step a), the operator:

- controls (20) a simultaneous display of four characteristic points of the nomogram (ABA-i) and of the calibration image,
- superposes (21), one on one, the four characteristic points of the nomogram (ABA) with the four corresponding characteristic points of the field on the calibration image,
- controls (22) the storing of the co-ordinates of the superposed points,

* in step b), the operator:

- controls (23) a simultaneous display of at least two points of the nomogram (ABA) and of the current image,
- superposes (24) a first characteristic point of the nomogram with a corresponding characteristic point of the field on the current image to adjust the angular orientation of the nomogram on the current image, and a second characteristic point of the nomogram with a corresponding characteristic point of the field on the current image to adjust the scale of the nomogram on the current image,
- controls (25) the storing of the co-ordinates of the two superposed points,
- and selects (26) a selected point of the field on the current image for the plotting (27) of the graphical object to said point.

8.  Method as claimed in any one of the preceding Claims, **characterised in that** the characteristic points (P1, P2, P3, P4, P'1, P'2, P'3, P'4) are predetermined as pitch line intersections of the field.

9.  Method as claimed in Claim 8, **characterised in that** the characteristic points are part of a penalty box of a football pitch.

10. Method as claimed in any one of the preceding Claims, **characterised in that** said selected point corresponds to the position of a player (HJ) on the football pitch and the virtual graphical object plotted to said selected point is an offside line (L-HJ).

11. Method as claimed in any one of Claims 1 to 8, **characterised in that** the current image in step b) consists of a filmed sequence whilst the camera (CAM) is fixed in terms of adjustment, and **in that** said selected point corresponds to the position of the hand of a player on a rugby pitch and the graphical object plotted to said selected point is a knock-on line.

12. Method as claimed in any one of Claims 1 to 11, **characterised in that** the current image in step b) is taken from a sequence of images, and **in that** the method further comprises a step of comparatively analysing other images of the sequence with the current image and a step of estimating camera parameters when obtaining the other images from the parameters obtained for the current image.

13. Method as claimed in Claim 12, **characterised in that** said comparative analysis step implements an analysis algorithm of overall changes of the images.

14. Method as claimed in any one of Claims 12 and 13, **characterised in that** the estimated camera parameters are used to modify the plotting of the graphical object between the images of the sequence.

15. Installation for the implementation of the method as claimed in any one of the preceding Claims, comprising:

    - a camera (CAM) adjustable according to N degrees of freedom, the number N being such that j = E[(N+1)/2] is less than 4, E(x) designating the whole part of x, and
    - computer means comprising at least one central processing unit (CPU) connected to the camera, a display monitor (MON) and an input device (SOU),

    **characterised in that** the central processing unit comprises a memory able to store a computer programme product comprising instructions for the implementation of the method.

16. Computer programme product intended to be stored in a memory of a central processing unit of an installation as claimed in Claim 15, and/or on a removable memory support intended to co-operate with a reader corresponding to said central processing unit and/or downloadable via a telecommunication network, **characterised in that** it comprises instructions for the implementation of the method as claimed in any one of Claims 1 to 14.

**Patentansprüche**

1.  Mit IT-Mitteln umgesetztes Verfahren zur Darstellung eines virtuellen graphischen Objekts in einem Bild, das mit einer Kamera erfasst wird, die ein Feld und insbesondere ein Spielfeld für ein Sportereignis filmt, **dadurch gekennzeichnet, dass** es Folgendes umfasst:

    a) eine Kalibrierungsetappe mit den nachstehenden Vorgängen:

- Einplanung einer Kamera, die N Grad Einstellungsfreiheit bietet, wobei die Anzahl N derart bestimmt wird, dass die Anzahl j=E[(N+1)/2] kleiner als 4 ist, wobei E(x) den vollen Teil von x bezeichnet,
- Erlangung eines unbeweglichen Kalibrierungsbilds des Felds mit dieser Kamera und manuelles Anpeilen (21) mit diesem Kalibrierungsbild von zumindest vier Kennzeichnungspunkten des Felds, die durch jeweils im Voraus bekannte Abstände getrennt werden,
- Speicherung (22) der im Kalibrierungsbild sichtbaren Positionsdaten dieser vier Kennzeichnungspunkte,

b) eine virtuelle Darstellungsetappe auf einem laufenden Bild, das mit einer herkömmlichen Einstellung nach den genannten N Freiheitsgraden erlangt wird, mit den nachstehenden Vorgängen:

- manuelle Auswahl (24) der auf einem laufenden Bild sichtbaren Punkte, die untereinander getrennt werden, und der vier Kennzeichnungspunkte der Kalibrierungsetappe durch jeweils im Voraus bekannte Abstände und Speicherung der auf dem laufenden Bild dieser j Kennzeichnungspunkt sichtbaren Positionsdaten,
- durch Triangulierung auf den vier Kennzeichnungspunkten des Kalibrierungsbilds einerseits und auf den j Kennzeichnungspunkten des herkömmlichen Bilds andrerseits Suche einer Perspektiv- und oder Zoomwirkung, die der laufenden Einstellung der Kamera nach den N Freiheitsgraden eigen ist,
- manuelle Auswahl (26) eines ausgewählten Punkts des laufenden Bilds und Steuerung (27) einer Darstellung des graphischen Objekts in diesem ausgewählten Punkt, wobei diese Darstellung angewandt wird und auf dem laufenden Bild mit derselben Perspektiv- und/oder Zoomwirkung sichtbar wird.

2. Verfahren nach Anspruch 1, **dadurch gekennzeichnet, dass** die Kamera (CAM) in der Position stabil aber zumindest in Azimut ($\theta$) und/oder in Erhebung ($\phi$) und/oder im Zoom (r) derart mobil ist, dass die Anzahl j der Kennzeichnungspunkte in Etappe b) zwei beträgt.

3. Verfahren nach einem der Ansprüche 1 und 2, **dadurch gekennzeichnet, dass** die Positionsdaten der vier Kennzeichnungspunkte, die in Kalibrierungsetappe a) erfasst werden, vier Abszissenkoordinaten und vier Ordinatenkoordinaten in der Ebene des Kalibrierungsbilds angeben, die es ermöglichen, zumindest sieben Parameter entsprechend:

- drei orthogonalen Positionskoordinaten (X, Y, Z) der Koordinaten,
- jeweilige Azimut ($\theta$), Erhebungs- ($\phi$) und Rollneigungswinkel ($\rho$) der Kamera zur Erfassung des Kalibrierungsbilds
- einen Zoomeinstellungswert (r) der Kamera zur Erfassung des Kalibrierungsbilds

abzuleiten.

4. Verfahren nach Anspruch 3 für eine Aufnahme in Verbindung mit Anspruch 2,
**dadurch gekennzeichnet, dass** anlässlich der Kalibrierungsetappe a) ein verbindlicher Rollneigungswinkel ($\rho$) der Kamera festgelegt wird,
und dass die Positionsdaten der beiden Kennzeichnungspunkte, die unter Etappe b) auf dem laufenden Bild nachgewiesen wurden, zwei Abszissenkoordinaten und zwei Ordinatenkoordinaten in der Ebene des laufenden Bilds darstellen, die eine Neubewertung von zumindest drei Parametern entsprechend:

- jeweiligen Azimutwinkeln ($\theta$) und Erhebungswinkeln ($\phi$) der Kamera zur Erfassung des laufenden Bilds und
- einem Zoomeinstellungswert (r) der Kamera zur Erfassung des laufenden Bilds

ermöglichen.

5. Verfahren nach einem der Ansprüche 3 und 4, **dadurch gekennzeichnet, dass** anlässlich der Kalibrierungsetappe a) zudem ein achter Parameter hinsichtlich der Abweichungen der Kamera abgeleitet wird.

6. Verfahren nach einem der Ansprüche 2 und 4, **dadurch gekennzeichnet, dass**:

- anlässlich der Etappe a) aufgrund einer an den vier Kennzeichnungspunkten des Kalibrierungsbilds durchgeführten Triangulierung ein Abakus (ABA) des Felds bestimmt wird und
- dieser Abakus (ABA) anlässlich der Etappe b) in Winkelrichtung und im Maßstab angepasst wird, um einen Teil des auf dem laufenden Bild sichtbaren Felds zu überdecken, wobei eine zweite Triangulierung erfolgt, die an den beiden Kennzeichnungspunkten des laufenden Bilds durchgeführt wird.

7. Verfahren nach Anspruch 6, das mit IT-Mitteln umgesetzt wird, die zumindest eine Zentraleinheit (UC), einen Visualisierungsbildschirm (MON) und ein Erfassungsorgan (SOU) umfassen, wobei diese Mittel von einem Bediener genutzt werden,
**dadurch gekennzeichnet, dass**

• der Bediener anlässlich der Etappe a):

- eine Simultananzeige der vier Kennzeichnungspunkte (ABA-i) und des Kalibrierungsbilds steuert (20),
- die vier Kennzeichnungspunkte des Abakus (ABA) nacheinander mit den vier isologen Kennzeichnungspunkten des Felds auf dem Kalibrierungsbild überdeckt (21),
- die Speicherung der Koordinaten der vier überdeckten Punkte steuert (22),

• der Bediener anlässlich der Etappe b):

- eine Simultananzeige von zumindest zwei Punkten des Abakus (ABA) und des laufenden Bilds steuert (23),
- einen ersten Kennzeichnungspunkt des Abakus mit einem isologen Kennzeichnungspunkt des Felds auf dem laufenden Bild zur Einstellung der Winkelrichtung des Abakus auf dem laufenden Bild und einen zweiten Kennzeichnungspunkt des Abakus mit einem isologen Kennzeichnungspunkt des Felds auf dem laufenden Bild zur Einstellung des Maßstabs des Abakus auf dem laufenden Bild überdeckt (24),
- die Speicherung der Koordinaten der beiden überdeckten Punkte steuert (25) und
- einen ausgewählten Punkt des Felds auf dem laufenden Bild zur Darstellung (27) des graphischen Objekts mit diesem Punkt (26) auswählt.

8. Verfahren nach einem der vorstehenden Ansprüche, **dadurch gekennzeichnet, dass** die Punkte (P1, P2, P3, P4, P'1, P'2, P'3, P'4) als Schnittpunkte der Spiellinien des Felds vorbestimmt sind.

9. Verfahren nach Anspruch 8, **dadurch gekennzeichnet, dass** die Kennzeichnungspunkte Teil einer Instandsetzungsfläche eines Fußballfelds sind.

10. verfahren nach einem der vorstehenden Ansprüche, **dadurch gekennzeichnet, dass** der genannte ausgewählte Punkt der Position eines Spielers (HJ) auf einem Fußballfeld entspricht und der virtuelle graphische Gegenstand, der an diesem ausgewählten Punkt dargestellt wird, eine Linie außerhalb des Spielfelds (L-HJ) darstellt.

11. Verfahren nach einem der Ansprüche 1 bis 8, **dadurch gekennzeichnet, dass** das laufende Bild der Etappe b) aus einer gefilmten Sequenz besteht, während die Kamera (CAM) stabil geregelt ist, und dass der genannte ausgewählte Punkt der Position der Hand eines Spielers auf einem Rugbyfeld entspricht und der graphische Gegenstand, der an diesem ausgewählten Punkt dargestellt wird, eine Vorderlinie ist.

12. Verfahren nach einem der Ansprüche 1 bis 11, **dadurch gekennzeichnet, dass** das laufende Bild der Etappe b) ein Auszug einer Bildsequenz ist und dass das Verfahren darüber hinaus eine Vergleichsanalyseetappe anderer Bilder der Sequenz mit dem laufenden Bild und eine Bewertungsetappe der Kameraparameter anlässlich der Erfassung der übrigen Bilder aufgrund der mit dem laufenden Bild erhaltenen Bilder umfasst.

13. Verfahren nach Anspruch 12, **dadurch gekennzeichnet, dass** die genannte Vergleichsanalyseetappe einen Analysealgorithmus der globalen Bildänderungen umsetzt.

14. verfahren nach einem der Ansprüche 12 und 13, **dadurch gekennzeichnet, dass** die bewerteten Kameraparameter zur Änderung der Darstellung des graphischen Objekts zwischen den Bildern der Sequenz genutzt werden.

15. Vorrichtung zur Umsetzung des Verfahrens nach einem der vorstehenden Ansprüche, die umfasst:

- eine Kamera (CAM), die nach N Freiheitsgraden einstellbar ist, wobei die Anzahl N derart gewählt ist, dass j=E[(N+1)/2] kleiner als 4, wobei E(x) den vollen Teil von x bezeichnet, und
- IT-Mittel, die zumindest eine mit der Kamera verbundene Zentraleinheit (UC), einen Visualisierungsbildschirm (MON) und ein Erfassungsorgan (SOU) umfassen,

**dadurch gekennzeichnet, dass** die Zentraleinheit einen Speicher aufweist, der geeignet ist, ein Computerprogrammprodukt zu speichern, das Anweisungen zur Umsetzung des Verfahrens beinhaltet.

16. Computerprogrammprodukt zur Speicherung im Zentraleinheitspeicher einer Vorrichtung nach Anspruch 15 und/oder auf einem beweglichen Speicherträger, der mit einem isologen Leser dieser Zentraleinheit wirkt und/oder zum Download über ein Fernsprechnetz, **dadurch gekennzeichnet, dass** er Anweisungen zur Umsetzung des Verfahrens nach einem der Ansprüche 1 bis 14 umfasst.

FIG. 1

EP 1 739 626 B1

FIG. 2

FIG. 3A

FIG. 3B

FIG. 3C

FIG. 4A

FIG. 4B

ABA

FIG. 4C

FIG. 5A

FIG. 5B

FIG. 5C

FIG. 5D

**EP 1 739 626 B1**

**Documents brevets cités dans la description**

- EP 0477351 A

- EP 1047264 A